# EUROPÄISCHE PATENTANMELDUNG

(11) **EP 0 851 686 A2**
(43) Veröffentlichungstag der Anmeldung: **01.07.1998**
(21) Anmeldenummer: 97122983.6
(22) Anmeldetag: 30.12.1997
(51) Int. Cl.: H04N 9/31

(54) **Vorrichtung und Verfahren zur grossflächigen Darstellung von Informationen mittels Flüssigkeitskristallanzeigen**

(30) Priorität: 30.12.1996 DE 19654440
(71) Anmelder: mediatec Gesellschaft für multimediale Systemlösungen mbH, 90429 Nürnberg (DE)
(72) Erfinder: Lutze, Rainer, Dr., 90421 Nürnberg (DE)
(74) Vertreter: Schneck, Herbert, Dipl.-Phys., Dr.

(57) **Zusammenfassung**

Bei einer Vorrichtung (A) zur Darstellung großflächiger Informationen mit einem Anzeigebild (B) bestehend aus einer zweidimensionalen Aneinanderreihung (einer Mehrzahl) von Bildelementen (C ), diese wiederum bestehend aus jeweils einem LCD (D), wobei ein LCD (D) jeweils durch eine punktförmgie Lichtquelle (L) rückbeleuchtet wird und das Bild (E') der Anzeigefläche (E) des LCDs (D) vergrößert auf eine Projektionsmattscheibe (M) derart geworfen wird, daß durch die gegenseitige Projektion der Anzeigeflächen (E) der LCDs (D) als Bildelemente des Anzeigebildes (B) die Zwischenräume zwischen den Anzeigeflächen der LCDs (D) ausgeblendet werden und das Anzeigebild (B) sich als nahtlose Aneinanderreihung der projizierten, vergrößerten Anzeigeflächen (E') der einzelnen LCDs (D) ergibt, ist zur Erzielung einer geringen Bautiefe bei hoher Leuchtstärke vorgesehen, daß die Projektionsmattscheibe (M) unmittelbar vor den LCDs (D), d.h. ohne Zwischenschaltung optischer Elemente, und in geringem Abstand von diesen angeordnet ist.

## Beschreibung

Die Erfindung richtet sich auf eine Vorrichtung und ein Verfahren zur großflächigen Darstellung von Informationen mittels Flüssigkeitskristallanzeigen, wobei die aktive Fläche der Flüssigkeitskristallanzeigen durch je eine punktförmige Lichtquelle beleuchtet und vergrößert auf eine Mattscheibe geworfen werden.

Die großflächige, dynamische Darstellung von graphischer oder textueller Information in einem Anzeigebild wird bisher entweder durch lichtoptische Projektionseinrichtungen erreicht, die ein einzelnes Ausgangsbild auf ein Vielfaches der ursprünglichen Bildgröße vergrößern, oder durch eine zweidimensionale Aneinanderreihung einzelner, diskreter Bildelemente zu einem Anzeigebild. Diese Bildelemente stellen dann entweder einzelne Bildpunkte des Anzeigebildes oder Teilbereiche des Anzeigebildes dar. Die Erzielung sehr hoher Leuchtdichten für das Anzeigebild, die für eine Verwendung des Anzeigebildes im Tageslichtbereich Vorraussetzung sind, erfordert typischerweise die Verwendung mehrerer leistungsstarker Lichtquellen als Bildelemente bzw. für die Bildelemente, die dann durch eine geeignete zweidimensionale Aneinanderreihung eine hinreichend hohe Leuchtdichte realisieren. Großflächige Anzeigebilder der beschriebenen Art werden etwa in Flughäfen und Bahnhöfen benötigt, um Fahrgäste über die angebotenen Transportmöglichkeiten und Dienstleistungen zu informieren.

Für die Realisierung von Bildelementen von Anzeigebildern mit höchster Leuchtdichte und Bildauflösung bieten sich insbesondere Flüssigkeitskristallanzeigen an, die im Gegensatz zu beispielsweise LEDs, bistabilen Magnetanzeigen oder dergleichen nicht nur eine sehr hohe Bildauflösung erlauben, sondern auch im Gegensatz zu Kathodenstrahlmonitoren, Plasma- und Elektrolumineszenzanzeigen als Lichtventile eine Leuchtdichte erlauben, die prinzipiell nur durch die Stärke der verwendeten Rückbeleuchtung begrenzt ist.

Die zweidimensionale Aneinanderreihung solcher Bildelemente aus rückbeleuchteten Flüssigkeitskristallanzeigen (LCDs), typischerweise in Aktiv-Matrix Technik (TFT-LCDs), zu großflächigen Anzeigebildern ist aber bisher mit dem Nachteil behaftet, daß die Aneinanderreihung jeweils unter Verwendung von Zwischenräumen ( 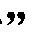 Stegen") erfolgen muß, die um die (aktive) Anzeigefläche eines TFT-LCDs angeordnet sind und für die Aufnahme der Ansteuerungselektronik des Flachbildschirms benötigt werden. Diese Ansteuerugselektronik beinhaltet insbesondere die Zeilen- und Spaltenansteuerung der Anzeigefläche und umschließt die aktive Anzeigefläche eines Bildelementes typischerweise an zwei bis drei Seiten.

Zur Überbrückung dieser optisch störenden Zwischenräume zwischen den einzelnen Bildelementen einer großflächigen Anzeige sind bisher, wenn überhaupt, optische Vergrößerungseinrichtungen für die einzelnen Bildelemente verwendet worden. Mittels optischer Linsen wird dabei ein vergrößertes Bild der aktiven Anzeigefläche des TFT-LC Displays erzeugt, und es werden durch diese optische Vergrößerung die Zwischenräume zwischen jeweils im Anzeigebild benachbarten TFT-LCDs ausgeblendet.

Diese Verfahren haben je nach verwendetem optischen System unterschiedliche Nachteile. Wird die Vergrößerung der aktiven Anzeigefläche des TFT-LCDs durch virtuelle Bilder bewirkt (z.B. mit Fresnel-Linsen), so wird hierdurch typischerweise der Einblickswinkel auf ein TFT-LC Display derart stark eingeschränkt, daß bei einem zunehmend nicht-orthogonalen Betrachtungswinkel in Bezug zur Anzeigefläche des TFT-LCDs in der zweidimensionalen Aneinanderreihung der Bildelemente in einem Anzeigebild einzelne Bildbereiche der aktiven Anzeigefläche der TFT-LCDs nicht oder nur stark verzerrt abgebildet werden und für den Betrachter ganz verloren gehen können. Werden reelle Bilder der aktiven Anzeigefläche der einzelnen TFT-LCDs durch lichtoptische Rückprojektionseinrichtungen auf eine Mattscheibe geworfen, so wird durch das optische System eine erhebliche Bautiefe für die Anzeigeeinrichtung benötigt, um durch nicht zu große Öffnungswinkel die Abbildungsfehler des verwendeten optischen Systems sowie den Lichtabfall zum Bildrand hin in vertretbaren Grenzen zu halten. In jedem Fall tragen die jeweils proportional zur Anzahl der Bildelemente benötigten optischen Übertragungssysteme (Linsen bzw. Objektive) auch zu einer erheblichen Verteuerung der großflächigen Anzeige bei.

Hiervon ausgehend liegt der Erfindung die Aufgabe zugrunde, unter Verwendung einer Mehrzahl von Flüssigkeitskristallanzeigen als Bildelemente, die ein Anzeigebild sehr hoher Leuchtdichte und Bildauflösung erlauben, eine (scheinbare) zweidimensionale Anreihung der aktiven Anzeigefläche solcher Flachbildschirme zu einem großflächigen Anzeigebild ohne wahrnehmbare Zwischenräume zwischen den Bildelementen bei maximalem Betrachtungswinkel des Anzeigebildes und sehr geringer Bautiefe der Anzeigeeinrichtung zu realisieren.

Diese Aufgabe wird gelöst durch die Vorrichtung mit den Merkmalen des kennzeichnenden Teils von Anspruch 1 und durch das Verfahren mit den Merkmalen des kennzeichnenden Teils von Anspruch 6. Die Vorrichtung wird dabei von einer Ansteuereinrichtung gesteuert, wie sie etwa in der deutschen Patentanmeldung No. 196 07 816 beschrieben ist.

Die erfindungsgemäße Vorrichtung bzw. das Verfahren verwenden zunächst das bekannte Prinzip der Schattenprojektion, das die aktive Anzeigefläche einer Flüssigkeitskristallanzeige, durch eine punktförmige Lichtquelle beleuchtet, derart vergrößert auf eine (gemeinsame) Mattscheibe wirft, so daß durch die Vergrößerung die Zwischenräume zwischen den einzelnen aktiven Anzeigeflächen der Flüssigkeitskristallanzeigen ausgeblendet werden und sich die Inhalte der einzelnen aktiven Anzeigeflächen der TFT-LC Displays als Bildelemente eines großflächigen Anzeigebildes auf der Projektionsmattscheibe nahtlos aneinanderreihen. Im Gegensatz zu den bekannten Lösungen werden dabei - außer der Projektionsmattscheibe - keine weiteren optischen Übertragungssysteme (Objektive bzw. Linsen) zwischen Flüssigkeitskristallanzeigen und Betrachter benötigt, die den Betrachtungswinkel einschränken und/oder eine besonders große Bautiefe der Anzeigevorrichtung erfordern würden. Die Erzeugung eines reellen Bildes der aktiven Anzeigeflächen der TFT-LCDs auf der Projektionsmattscheibe hat zudem den Vorteil, daß durch die Übertragung des Bildes auf die Mattscheibe die Abhängigkeiten des Bildkontrastes und der Farbwiedergabe der TFT-LCDs vom Betrachtungswinkel eliminiert werden. Das Bild der TFT-LCDs wird immer fest, und nur durch die Anordnung der Lichtquelle hinter dem TFT-LCDs bestimmt, auf die Projektionsmattscheibe geworfen, die Bildqualität ist damit überwiegend nur noch durch die optischen Eigenschaften der Mattscheibe (Anstreuungsgrad und dergleichen) bestimmt.

Die notwendige Vergrößerung der Anzeigeflächen der TFT-LCDs, um den Zwischenraum für die Ansteuerungselektronik zwischen jeweils zwei benachbarten Flachbildschirmen auszublenden, ist unter Berücksichtigung der Bauformen heutiger Flüssigkeitskristallanzeigen gering (ca. 25 %). Unter weiterer Berücksichtigung der hohen Auflösung heutiger TFT-LCDs von typischerweise 640 x 480 Bildpunkten und mehr, die etwa in einer Einzelpunktgröße on 0,3 x 0,3 mm für einen Flachbildschirm mit einer Bildschirmdiagonalen von 10'' resultieren, kann die durch die optische Abbildung und Vergrößerung bewirkte Unschärfe als für den Einsatzzweck großflächiger Anzeigen im allgemeinen akzeptabel bewertet werden.

Bei doppelseitigen Anzeigen, wie sie anmeldungsgemäß etwa zur Zugzielanzeige im Bahnhofsbereich verwendet werden, kann die punktförmige Lichtquelle selbstverständlich zur Rückbeleuchtung und Projektion von zwei gegenüberliegenden Flüssigkeitskristallanzeigen auf die Front- und Rückfläche des doppelseitigen Anzeigers verwendet werden.

Weitere vorteilhafte Ausgestaltungen der Erfindung ergeben sich aus den Unteransprüchen 2 bis 5.

Durch den typischerweise geringen Abstand der verwendeten Lichtquelle zu einem TFT-LCDs, der vorteilsmäßig zur Erzielung einer geringen Bautiefe der Anzeigevorrichtung, verwendet wird, ergibt sich ein großer Öffnungswinkel des durch Lichtquelle, TFT-LCD und Projektionsmattscheibe gebildeten optischen Systems mit einem entsprechenden Lichtabfall radial vom Bild der Lichtquelle auf der Projektionsmattscheibe weg. Dieser Lichtabfall kann vermieden werden, wenn das TFT-LCD zusätzlich zur Anzeige von dynamisch wechselnden Inhalten als Lichtfilter verwendet wird und eine dem Helligkeitsabfall entgegengesetzte Dichtemaske dem Anzeigeinhalt kontinuierlich überlagert wird. Grundsätzlich ist es natürlich auch denkbar, eine den Helligkeitsabfall kompensierende dichte Maske durch eine Streuscheibe zu kompensieren, bei der die Dichteverteilung der Streuzentren so ausgebildet ist, daß im Bereich niedrigerer Helligkeit eine stärkere Streuung und im Bereich höherer Lichtstärke eine geringere Streuung stattfindet.

Geeignete punktförmige Lichtquellen genügend hoher Intensität und Lebensdauer für die erfindungsgemäße Vorrichtung lassen sich heute vorzugsweise mit Entladungslampen realisieren, die einen Lichtbogen zur Lichterzeugung verwenden. Derartige Entladungslampen haben aber den Nachteil, daß die Farbtemperatur des Lichtbogens sowohl einer relativ großen fertigungsbedingten Streuweite unterworfen ist und diese sich auch im Laufe der Brenndauer der Entladungslampe durch Erschöpfung bzw. chemische Reaktionen der Inhaltsstoffe (in der Brennkammer) der Lampe ändert. Bei einer zweidimensionalen Aneinanderreihung einzelner, durch Entladungslampen rückbeleuchteter Bildelemente der beschriebenen Art zu einem großflächigen Anzeigebild wird dieses einen allgemein unakzeptablen Gesamteindruck mit einer uneinheitlichen 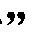 fleckigen" Gesamtfarbe des Anzeigebildes hervorrufen. Diese Situation gilt insbesondere nach dem notwendigen Wechsel der Leuchtmittel der Anzeigeeinrichtung nach Ablauf ihrer Lebensdauer, bei dem sich die Farbtemperatur der neuen Leuchtmittel regelmäßig von der Farbtemperatur der vorhandenen, schon in Gebrauch befindlichen Leuchtmittel wahrnehmbar unterscheiden wird.

Die erfindungsgemäße Vorrichtung bzw. das Verfahren lösen dieses Problem durch einzelne Farbtemperatursensoren, die im Strahlbereich jeweils einer Lichtquelle zwischen Lichtquelle und TFT-LCDs angeordnet sind und die Farbtemperatur (sowie ggfs. einen Ausfall) der Lichtquelle regelmäßig messen und unter Verwendung der TFT-LCDs als (dynamische) Farbfilter regeln. Die Ergebnisse dieser Farbtemperaturmessung werden dazu zu einer Auswertungseinrichtung zugeführt, die das Meßergebnis in Bezug auf eien Sollfarbtemperatur (etwa 5000 °K) in einen Farbkorrekturwert umrechnet, der demjenigen Steuerungsrechner zugeführt wird, der den Anzeigeinhalt für die der Lichtquelle zugeordneten TFT-LCDs berechnet und die Anzeigeinhalte an die TFT-LCDs ausgibt. Die sensorisch ermittelten Farbkorrekturwerte überlagern dann den Anzeigegehalt für das (die) TFT-LC Display(s) - zusammen mit der Dichtekorrektur bzw. -maske für das Anzeigebild - und stellen eine absolut gleichförmige Leuchtdichte- und Farbtemperaturverteilung der großflächigen Anzeige sicher.

Nachfolgend wird die Erfindung anhand eines bevorzugten Ausführungsbeispieles in Verbindung mit der Zeichnung näher erläutert. Dabei zeigen
- Fig. 1: die Ansicht einer doppelseitigen Anzeigeeinrichtung,
- Fig. 2: einen horizontalen Querschnitt durch die Anzeigeeinrichtung nach Anspruch 1 zur Veranschaulichung des optischen Systems,
- Fig. 3: einen vertikalen Querschnitt durch die Anzeigeeinrichtung und
- Fig. 4: eine blockschaltbildartige Darstellung der Steuerungs- und Regel komponenten einer erfindungsgemäßen Anzeige-Einrichtung.

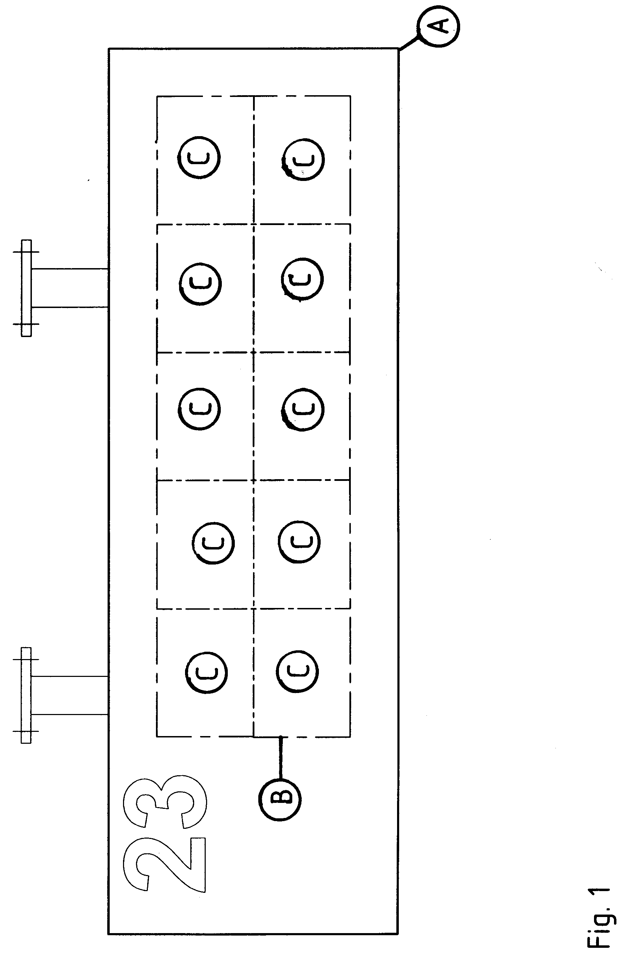

Figur 1 stelle eine schematische Ansicht einer erfindungsgemäßen Anzeige-Einrichtung A dar, welche im Ausführungsbeispiel als Fahrgastinformation für Bahnsteige für den Zugverkehr ausgebildet ist. Die Anzeige-Eirnichtung A umfaßt ein Anzeigebild B, welches durch eine Mehrzahl von Bildelementen C gebildet wird.

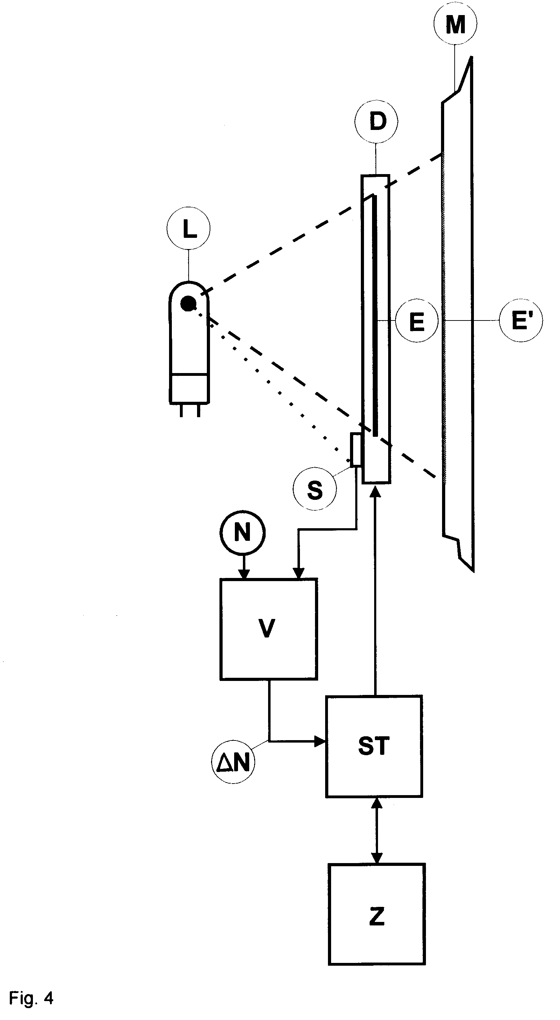

In der Darstellung gemäß Fig. 4 ist erkennbar, daß als punktförmige Lichtquelle für die Erzeugung jedes der Bildelemente C eine Entladungslampe L verwendet wird, welche eine ansteuerbare Flüssigkristallanzeige D mit einer Anzeigefläche E von hinten derart beleuchtet, daß ein Bild E' auf eine Mattscheibe M projiziert wird, welche unmittelbar vor den LCD D angeordnet ist. Im Sinne der Anmeldung ist hierbei unter 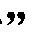 unmittelbar" zu verstehen, daß zwischen LCD D und Mattscheibe M keine optischen Elemente angeordnet sind und der Abstand zwischen LCD D und Mattscheibe M dementsprechend ungefähr 2 bis 3cm beträgt. Hierdurch wird eine hohe Leuchtdichte und eine außerordentlich kompakte Bauweise erreicht.

Im Bereich des durch die Entladungslampe L erzeugten Lichtkegels ist ein Farbsensor S angeordnet, der jedoch außerhalb des zur Projektion dienenden Strahlenganges liegt. Durch diesen Farbtemperatursensor S wird die aktuelle Farbtemperatur der Lichtquelle L gemessen und einer AuswerteEinrichtung V zugeführt, wo er mit einem vorgegebenen Sollwert N zur Erzeugung eines Farbkorrekturfaktors ΔN verglichen wird, wobei dieser Farbkorrekturfaktor ΔN einem Steuerungsrechner ST zugeführt wird, der diesen Farbkorrekturfaktor ΔN dem darzustellenden Digitalbild auf dem LCD D überlagert, so daß im Ergebnis eine gleichförmige Farbtemperatur für alle Bildelemente C des Anzeigebildes B erreichbar ist, wobei das Anzeigebild B durch eine zentrale Steuerungseinrichtung Z gesteuert wird.

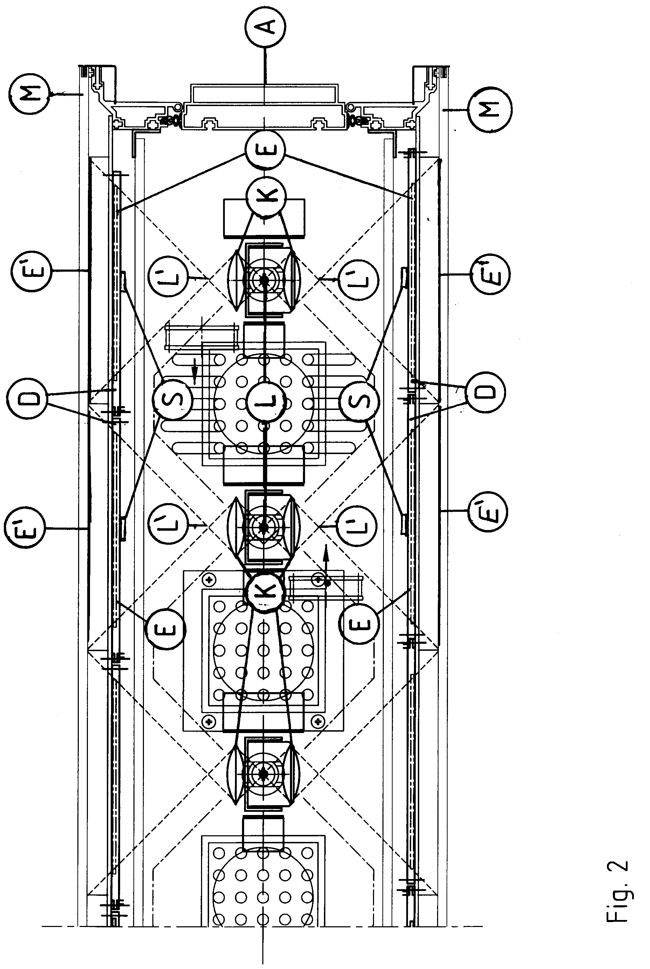

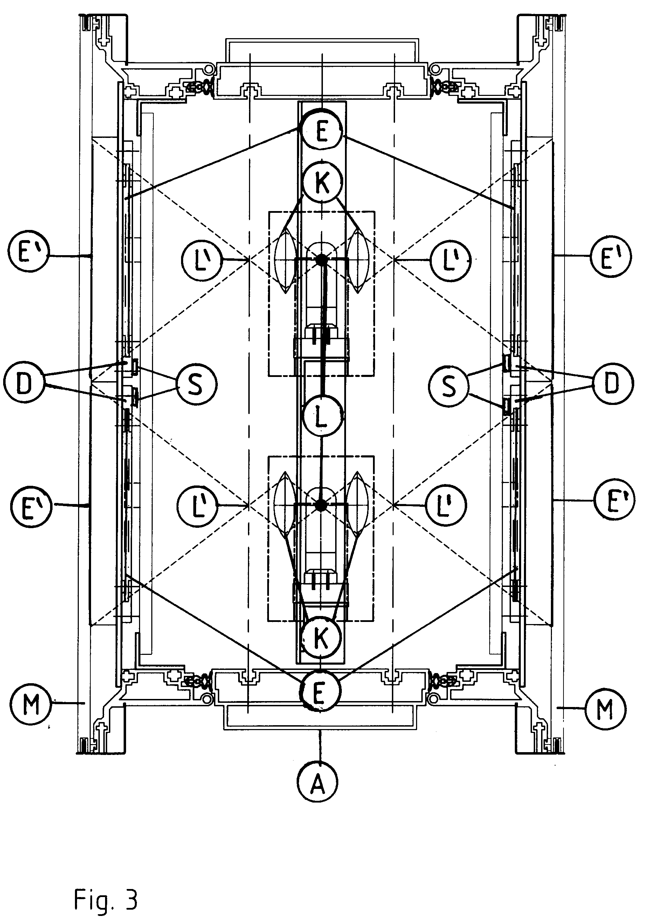

Aus den Figuren 2 und 3 ist erkennbar, daß im Ausführungsbeispiel jede punktförmige Lichtquelle L dazu verwendet wird, zwei einander gegenüberliegende Anzeigebilder B zu durchleuchten, so daß eine derartige Anzeige-Einrichtung A im Ergebnis zwei Anzeigebilder B liefert, die zueinander einen Winkel von 180° aufweisen. Sofern bei anderen Ausführungsbeispielen nur ein einziges Anzeigebild B erforderlich ist, wird man jeder Lichtquelle L an ihrer Rückseite einen Spiegel derart zuordnen, daß auch das nach hinten abgestrahlte Licht ausgenutzt und dementsprechend die Lichtausbeute erhöht wird.

Die erfindungsgemäß vorgesehene Anordnung von Lichtquelle L, LCD D und Mattscheibe M führt dazu, daß die Intensitätsverteilung des auf die Mattscheibe M projizierten Bildes D' ungleichmäßig ist, so daß eine Korrektur im Sinne einer Vergleichmäßigung erforderlich ist. Dies kann dadurch bewerkstelligt werden, daß man die LCDs als Dichtefilter benutzt, d.h. sie werden unabhängig von dem jeweils anzuzeigenden Bild hinsichtlich ihrer Durchlässigkeit so angesteuert, daß die geometriebedingte ungleichmäßige Lichtintensität auf elektronischem Wege kompensiert wird.
a) Zur Steigerung der Güte der Farbwiedergabe des Anzeigebildes (D) können unmittelbar vor und hinter dem LCD (D) optische Linsen - vorzugsweise Fresnel'sche Stufenlinsen - derart vorhanden sein, daß ein zur Lichteintrittsebene des LCD idealerweise orthogonaler Durchgang der von der Lichtquelle (L) ausgehenden Lichtstrahlen durch des LCD gegeben ist. Dazu besitzt die zwischen Lichtquelle und LCD angeordnete Linse eine positive Brennweite, die zwischen LCD und Projektionsmattscheibe (M) angeordnete Linse eine negative Brennweite derart, daß der Strahlengang zur Projektionsmattscheibe nach Verlassen der Linse negativer Brennweite wie in der ursprünglichen Anordnung (1) der Schutzrechtsanmeldung ohne Linsen ist.
b) Zur Steigerung der Leuchtdichte und Gleichmäßigkeit der Leuchtdichteverteilung kann zwischen LCD (D) und Projektionsmattscheibe (M) eine Fresnel'sche Stufenlinse positiver Brennweite derart vorhanden sein, daß das von der Lichtquelle (L) durch das LCD (D) eintreffende Licht idealerweise orthogonal zur Bildebene des Anzeigebildes (B) abgestrahlt und auf die Projektionsmattscheibe geworfen wird.
c) Ergänzend und alternativ zu der ursprünglichen Anordnung (1) in der Schutzrechtsanmeldung kann statt der punktförmigen Lichtquelle (L) als Rückbeleuchtung des LCD (D) auch eine flächige, diffuse Rückbeleuchtung vorhanden sein, wenn (1) zusätzlich die Lichtstrahlen der Lichtquelle durch ein zwischen Rückbeleuchtung und LCD zwischengeschaltetes Lichtfilter nur streng orthogonal ( Abweichung < 1°) auf die Lichteintrittsfläche des LCD auftreffen, und (2) das Bild (E') der Anzeigefläche (E) der LCDs (D) durch eine zwischen LCD und Projektionsmattscheibe (M) zwischengefügte Linse oder ein Objektiv negativer Brennweite vergrößert auf die Projektionsmattscheibe geworfen wird. Solche flächigen Lichtquellen haben insbesondere wegen der Gleichmäßigkiet der Ausleuchtung und des durch weitreichende Dimmbarkeit bedingten niedrigen Energieverbrauchs weitreichende Vorteile. Das Lichtfilter kann vorzugsweise durch eine zweidimensionale, streng parallele Anreihung einer großen Zahl von Lichtleitern gebildet werden, deren Länge sich zusammen mit dem Durchmesser aus der geforderten maximalen Winkelabweichung von maximal 1° ergibt.
d) Die bisherige Anspruch 10) ist so zu präzisieren und zu erweitern, daß die Gleichmäßigkeit des Anzeigebildes durch das Zusammenwirken α) des in Anspruch 4) beschriebenen Dichtefilters, β) des in Anspruch 7) beschriebenen Farbfilters, mit dem Farbstiche durch eine entsprechende Gegenfilterung kompensiert werden und γ) der in Anspruch 6) beschriebenen dimmbaren Rückbeleuchtung herbeigeführt werden, in dem eine höhere Dichte/Farbfilterung des LCD (D) durch eine gesteigerte Helligkeit der Rückbeleuchtung kompensiert wird und umgekehrt.

## Patentansprüche

1. Vorrichtung (A) zur Darstellung großflächiger Informationen mit einem Anzeigebild (B) bestehend aus einer zweidimensionalen Aneinanderreihung (einer Mehrzahl) von Bildelementen (C), diese wiederum bestehend aus jeweils einem LCD (D), wobei ein LCD (D) jeweils durch eine punktförmgie Lichtquelle (L) rückbeleuchtet wird und das Bild (E') der Anzeigefläche (E) des LCDs (D) vergrößert auf eine Projektionsmattscheibe (M) derart geworfen wird, daß durch die gegenseitige Projektion der Anzeigeflächen (E) der LCDs (D) als Bildelemente des Anzeigebildes (B) die Zwischenräume zwischen den Anzeigeflächen der LCDs (D) ausgeblendet werden und das Anzeigebild (B) sich als nahtlose Aneinanderreihung der projizierten, vergrößerten Anzeigeflächen (E') der einzelnen LCDs (D) ergibt, dadurch gekennzeichnet, daß die Projektionsmattscheibe (M) unmittelbar vor den LCDs (D), d.h. ohne Zwischenschaltung optischer Elemente, und in geringem Abstand von diesen angeordnet ist.

2. Vorrichtung nach Anspruch 1, dadurch gekennzeichnet, daß der Abstand zwischen LCDs (D) und Projektionsmattscheibe (M) kleiner als 50mm ist, insbesondere 2 bis 3 cm beträgt.

3. Vorrichtung nach Anspruch 1, dadurch gekennzeichnet, daß eine Kondensorlinse oder Objektiv (aus mehreren Linsen) (K) vorhanden ist, um eine nicht punktförmige Lichtquelle (L) in einen einzigen Bildpunkt (L') abzubilden und damit eine verbesserte Bildschärfe des Bildes (E') der Anzeigeflächen (E) der LCDs (D) auf der Projektionsmattscheibe (M) zu erhalten.

4. Vorrichtung nach Anspruch 1, dadurch gekennzeichnet, daß die LCDs (D) als Dichtefilter benutzt werden, um den durch die Anordnung der punktförmigen Lichtquellen (L bzw. L') hinter den LCDs bedingten Leuchtdichteabfall des projizierten Bildes (E') der Anzeigefläche (E) der LCDs (D) auf der Mattscheibe (M) derart zu kompensieren, daß ein dem Leuchtdichteabfall entgegengesetztes Dichtefilter überlagert wird, um eine gleichmäßige Leuchtdichteverteilung des projizierten Bildes (E') auf der Mattscheibe (M) zu erreichen.

5. Vorrichtung nach Anspruch 1, dadurch gekennzeichnet, daß die Lichtquelle (L) eine Entladungslampe ist.

6. Vorrichtung nach Anspruch 5, dadurch gekennzeichnet, daß die Entladungslampe dimmbar ist.

7. Vorrichtung nach Anspruch 1 oder 4, dadurch gekennzeichnet, daß jeweils ein Farbtemperatursensor (S) für die zur Rückbeleuchtung eines LCDs (D) vorhandene punktförmige Lichtquelle (L) (und außerhalb des Strahlganges von der Lichtquelle zum LCD) vorhanden ist, derart, daß die aktuelle Farbtemperatur der Lichtquelle (L) in einer Auswerteeinrichtung (V) mit einem vordefinierten Sollwert (N) verglichen wird und hieraus ein Farbkorrekturfaktor (ΔN) in einem geeigneten Farbraumsystem (z.B. R,G,B- oder H,S,L-System) so berechnet wird, daß der Farbkorrekturfaktor (ΔN) an einen Steuerungsrechner (ST) weitergeleitet wird, der diesen Farbkorrekturfaktor dem darzustellenden Digitalbild auf dem LCD (D) überlagert, so daß im Ergebnis eine gleichförmige Farbtemperatur für alle Bildelemente (C) des Anzeigebildes (B) und in weiten Grenzen unabhängig von der aktuellen Farbtemperatur der einzelnen Lichtquellen (L) erreichbar ist.

8. Vorrichtung nach Anspruch 7, dadurch gekennzeichnet, daß die Farbtemperatursensoren (S) zusätzlich zum Erkennen einer aktuellen Leuchtdichteänderung bzw. eines mögliches Abfalls der einem LCD (D) zugeordneten punktförmigen Lichtquelle (L) verwendet werden, derart, daß die Leuchtdichteänderung bzw. der Ausfall der Leuchtquelle (L) über eine Auswerteeinrichtung (V) an einem Steuerungsrechner (ST) weitergegeben wird, der bei einer Veränderung der Leuchtdichte der Lichtquelle (L) durch eine variable Dichtemaske, die dem darzustellenden Digitalbild auf dem LCD (D) überlagert wird, für eine gleichmäßige Leuchtdichte der einzelnen Bildelemente (C) des Anzeigebildes (B) sorgen kann bzw. einen Ausfall der Lichtquelle (L) an eine der Anzeigeeinrichtungen (A) übergeordnete zentrale Steuerungseinrichtung (Z) weitersignalisieren kann.

9. Verfahren zur Darstellung großflächiger Informationen mit einem Anzeigebild (B), bestehend aus einer zweidimensionalen Aneinanderreihung (einer Mehrzahl) von Bildelementen (C), diese wiederum bestehend aus jeweils einem LCD (D), wobei ein LCD (D) jeweils durch eine punktförmige, optional durch einen Kondensator (K) optimierte Lichtquelle (L) rückbeleuchtet wird und das Bild (E') der Anzeigefläche (E) des LCDs vergrößert auf eine Projektionsmattscheibe (M) derart aufgeworfen wird, daß durch die gegenseitige Projektion der Anzeigeflächen (E) der LCDs (D) als Bildelemente (C) des Anzeigebildes (B) die Zwischenräume zwischen den Anzeigeflächen (E) der LCDs (D) ausgeblendet werden, dadurch gekennzeichnet, daß das Bild der LCDs (D) unmittelbar auf die Projektionsmattscheibe (M), d.h. ohne Zwischenschaltung optischer Elemente, projiziert wird.

10. Verfahren nach Anspruch 9, gekennzeichnet durch die Verwendung der LCDs als Dichte- und Farbfilter, so daß der durch die punktförmige Lichtquelle (L bzw. L') bewirkte Leuchtdichteabfall innerhalb der auf die Mattscheibe (M) projizierten Bilder (E') der Anzeigeflächen (E) der LCDs (D) kompensiert und die mit Farbtemperatursensoren (S) gemessene aktuelle Farbtemperatur und Leuchtdichte der einzelnen Lichtquellen (L) zur Erzeugung eines in Leuchtdichte und Farbtemperatur sehr gleichförmigen Anzeigebildes (B) benutzbar ist.
